# EUROPÄISCHE PATENTSCHRIFT

(11) **EP 2 901 037 B1**
(45) Veröffentlichungstag und Bekanntmachung des Hinweises auf die Patenterteilung: **10.10.2018**
(21) Anmeldenummer: 13750849.5
(22) Anmeldetag: 09.08.2013
(51) Int. Cl.: F16D 55/36

(54) **BREMSANORDNUNG UND ELEKTROMOTOR MIT EINER BREMSANORDNUNG**
BRAKE SYSTEM AND ELECTRIC MOTOR COMPRISING SAID BRAKE SYSTEM
SYSTÈME DE FREIN ET MOTEUR ÉLECTRIQUE ÉQUIPÉ D'UN SYSTÈME DE FREIN

(30) Priorität: 28.09.2012 DE 102012019136
(43) Veröffentlichungstag der Anmeldung: 05.08.2015
(73) Patentinhaber: Sew-Eurodrive GmbH & Co. KG, 76646 Bruchsal (DE)
(72) Erfinder: JAHN, Jörg, 67112 Mutterstadt (DE)
(86) Internationale Anmeldenummer: PCT/EP2013/002400
(87) Internationale Veröffentlichungsnummer: WO 2014/048521

(56) Entgegenhaltungen:
- DE-A1- 10 049 168
- DE-A1- 19 733 169
- DE-U1-202005 017 379

## Beschreibung

Die Erfindung betrifft eine Bremsanordnung und Elektromotor mit einer Bremsanordnung.

Es ist allgemein bekannt, dass das Abbremsen einer Welle durch Andrücken eines Bremsbelags gegen eine Bremsfläche ausführbar ist.

Aus der DE 197 33 169 A1 ist eine elektromagnetisch gelüftete Reibungs-Sicherheitsbremse mit zwei unabhängigen Bremskreisen bekannt.

Aus der DE 100 49 168 A1 ist eine elektromagnetische Bremse bekannt.

Aus der DE 20 2005 017 379 U1 ist eine doppelt ausgeführte elektromagnetisch gelüftete Federdruckbremse für Vertikalbetrieb bekannt.

Der Erfindung liegt daher die Aufgabe zugrunde, eine Bremsanordnung für einen Elektromotor weiterzubilden, wobei die Funktionssicherheit verbessert sein soll.

Erfindungsgemäß wird die Aufgabe bei der Bremsanordnung nach den in Anspruch 1 und bei dem Elektromotor mit einer Bremsanordnung nach den in Anspruch 10 angegebenen Merkmalen gelöst.

Wichtige Merkmale der Erfindung bei der Bremsanordnung sind, dass sie mit einer abzubremsenden Welle ausgeführt ist, die mittels eines Lagers in einem Gehäuseteil, insbesondere Lagerflansch und/oder Bremslagerschild, gelagert ist,
wobei das Gehäuseteil drehfest mit einer Spulenwicklung, insbesondere Bremsspule, verbunden ist,
wobei eine Ankerscheibe drehfest, aber axial bewegbar mit dem Gehäuseteil verbunden ist,
wobei ein erster und ein zweiter Bremsbelagträger jeweils drehfest aber axial bewegbar mit der Welle verbunden ist,
wobei axial zwischen den Bremsbelagträgern eine Lamelle drehfest aber axial bewegbar angeordnet ist,
wobei die Lamelle mittels eines Begrenzungsmittels axial begrenzt ist,
wobei das Begrenzungsmittel mit dem Gehäuseteil (12) verbunden ist, insbesondere kraftschlüssig, formschlüssig, stoffschlüssig, und/oder fest verbunden ist und/oder schraubverbunden ist,
wobei das Gehäuseteil (12) eine Bremsfläche aufweist oder mit einem eine Bremsfläche aufweisenden Teil verbunden ist, insbesondere kraftschlüssig, formschlüssig, stoffschlüssig, und/oder fest verbunden ist und/oder schraubverbunden ist.

Von Vorteil ist dabei, dass die Funktionssicherheit erhöht ist. Denn die Lamelle einer solchen erfindungsgemäßen Doppelbremse ist nun in ihrer axialen Bewegungsfreiheit definiert. Denn das axiale Begrenzungsmittel begrenzt die axiale Bewegungsfreiheit. Dabei ist diese Bewegungsfreiheit vorzugsweise einstellbar und somit sind Fertigungstoleranzen ausgleichbar. Vorteiligerweise ist somit ein definiertes Freifahren beider Bremsbelagträger erreichbar. Außerdem ist der Luftspalt, den die beiden Reibpartner der Bremsbelagträger, also Lamelle und Ankerscheibe, beim Lüften der Bremse beziehungsweise beim Einfallen der Bremse, überwinden müssen, einstellbar, wenn der am Begrenzungsmittel ausgebildete Anschlag axial einstellbar, also verschiebbar, ist.

Vorzugsweise ist das Begrenzungsmittel schraubverbunden mit dem Spulenkern, also Magnetkörper. Dabei ist das Begrenzungsmittel gegen Verdrehen gesichert.

Bei einer vorteilhaften Ausgestaltung ist zwischen Lamelle und einem mit dem Gehäuseteil verbundenen Teil, insbesondere Spulenkern der Spulenwicklung und/oder die Spulenwicklung aufnehmender Magnetkörper, ein Federelement zum Freifahren der Lamelle angeordnet,
insbesondere zum Rückstellen der Lamelle bei Nichtbestromung der Spulenwicklung und/oder zum Andrücken der Lamelle gegen das Begrenzungsmittel, insbesondere gegen einen Anschlags-Abschnitt, insbesondere Absatz, des Begrenzungsmittels. Von Vorteil ist dabei, dass unabhängig von der Montageart, also Baulage, der Bremsanordnung ein definiertes Freifahren der Bremse, insbesondere beider Bremsbelagträger von ihren Reibpartnern, erreichbar ist.

Die Einstellung der axialen Position des Anschlags des Begrenzungsmittels kann entweder im gelüfteten oder im eingefallenen Zustand der Bremsanordnung erfolgen, also im bestromten oder unbestromten Betrieb der Bremsanordnung.

Bei einer vorteilhaften Ausgestaltung ist die Lamelle aus Stahl, insbesondere aus Stahlblech, gefertigt. Von Vorteil ist dabei, dass eine kostengünstige Herstellung ermöglicht ist und dass das Magnetfeld einem geringeren Luftspalt für die Feldlinien des mittels der Spulenwicklung gebildeten Elektromagnets ausgesetzt ist.

Bei einer vorteilhaften Ausgestaltung ist die Lamelle als Lochscheibe ausgeführt. Von Vorteil ist dabei, dass eine einfache Herstellung durch Stanzen oder Bohren ausführbar ist.

Bei einer vorteilhaften Ausgestaltung ist die Ankerscheibe aus einem ferromagnetischen Werkstoff, insbesondere Stahl, ausgeführt,
so dass bei bestromter Spulenwicklung die Ankerscheibe axial angezogen wird zum Magnetkörper hin. Von Vorteil ist dabei, dass der magnetische Widerstand für die Feldlinien des Elektromagnets gering ist.

Bei einer vorteilhaften Ausgestaltung ist die Spulenwicklung als Ringwicklung ausgeführt und in einem als Spulenkern wirksamen Magnetkörper aufgenommen ist,
insbesondere wobei der Spulenkern aus GGG-Guss, insbesondere Grauguss, gefertigt ist. Von Vorteil ist dabei, dass eine einfache Herstellung ermöglicht ist. Außerdem ist eine ringförmige Ausnehmung schon im Gussteil in materialsparender Weise ermöglicht. In die Ausnehmung muss nur der die Spulenwicklung umfassende Spulenträger eingelegt werden.

Gemäß der Erfindung weist das Begrenzungsmittel einen Anschlags-Abschnitt auf, wobei der Anschlags-Abschnitt radial weiter ausgedehnt ist als der den Anschlags-Abschnitt mit dem Spulenkern verbindende Abschnitt des Begrenzungsmittels, insbesondere wobei der Anschlags-Abschnitt eine auf ein Schraubteil aufgeschraubte Mutter ist oder ein Schraubenkopf eines Schraubteils. Von Vorteil ist dabei, dass die Bewegung der Lamelle mittels des Anschlags definiert, also entsprechend einer Vorgabe, begrenzbar ist und dieser Anschlag einstellbar ist.

Bei einer vorteilhaften Ausgestaltung umfasst das Begrenzungsmittel für die Lamelle ein Schraubteil, insbesondere Stiftschraube oder Schraube,
insbesondere wobei das Schraubteil mit einem Teil verbunden ist, insbesondere mit einem Schraubenkopf stoffschlüssig oder mit einer Mutter schraubverbunden ist. Von Vorteil ist dabei, dass die axiale Position des Anschlags einstellbar ist.

Bei einer vorteilhaften Ausgestaltung weist jeder Bremsbelagträger axial beidseitig einen jeweiligen Bremsbelag auf. Von Vorteil ist dabei, dass eine Doppelbremse realisierbar ist, wobei die Bremsbelagträger mittels jeweils eines ihrer Bremsbeläge gegen eine axial zwischengeordnete Lamelle abbremsbar sind.

Bei einer vorteilhaften Ausgestaltung weist die Lamelle eine Ausnehmung auf, durch welche das Begrenzungsmittel hindurchragt. Von Vorteil ist dabei, dass eine einfache Montage ausführbar ist, bei der der erste Bremsbelagträger, die Lamelle und der zweite Bremsbelagträger nacheinander aus einer einzigen gleichen Montagerichtung zuführbar und sind.

Weiterhin gemäß der Erfindung weist das Gehäuseteil eine Bremsfläche auf, gegen die ein Bremsbelag des ersten oder zweiten Bremsbelagträgers drückbar ist. Von Vorteil ist dabei, dass ein Abführen von Bremsenergie an das ein Lager der Welle aufnehmende Teil ausführbar ist, wobei auch die vom Lager erzeugte Wärme über das aufnehmende Teil an die Umgebung abgeführt werden muss.

Bei einer vorteilhaften Ausgestaltung ist das Gehäuseteil aus Stahl oder Stahlguss gefertigt. Von Vorteil ist dabei, dass eine kostengünstige Herstellung ermöglicht ist.

Wichtige Merkmale bei dem Elektromotor mit einer Bremsanordnung sind, dass die Welle eine Rotorwelle des Motors ist oder mit der Rotorwelle des Motors drehfest verbunden ist,
wobei die Rotorwelle mit einem Rotorblechpaket verbunden ist, an dem ein Kurzschlusskäfig und/oder Dauermagnete angeordnet sind.

Von Vorteil ist dabei, dass eine Doppelbremse am Motor integrierbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

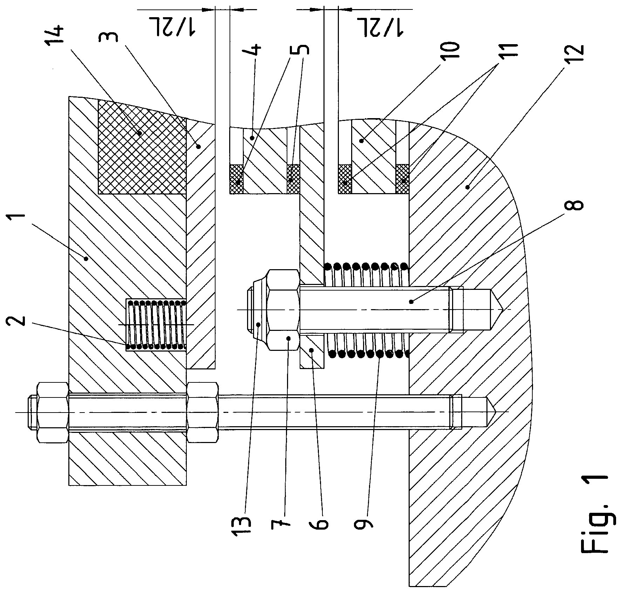

In der Figur 1 ist ein schematischer Querschnitt durch eine erfindungsgemäße Bremsanordnung gezeigt, wobei die bestromte Bremsspule 14 , eine Ankerscheibe 3 anzieht.

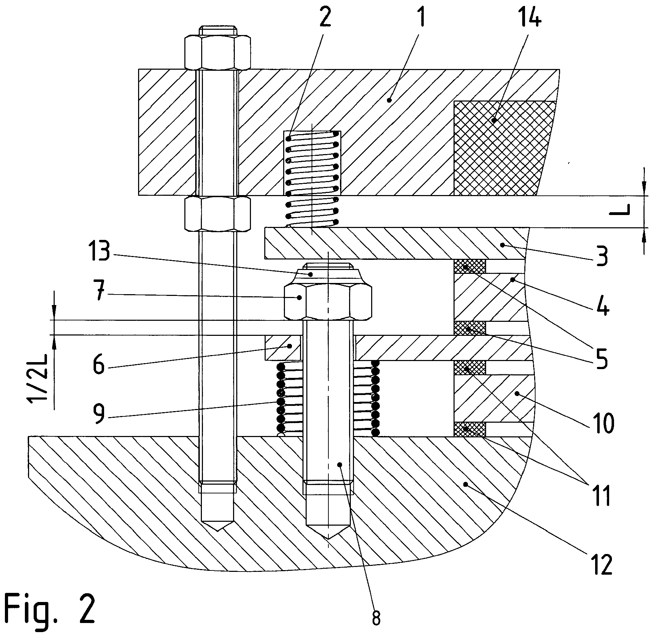

In der Figur 2 ist ein schematischer Querschnitt durch die erfindungsgemäße Bremsanordnung gezeigt, wobei die Bremsspule 14 unbestromt ist.

Bei der Bremsanordnung ist eine Bremsspule 14 als Ringwicklung ausgeführt und in einer Ausnehmung eines Magnetkörpers 1, also Spulenkerns, aufgenommen. Die Ausnehmung ist ebenfalls ringförmig ausgebildet. Auf diese Weise ist ein Elektromagnet gebildet, der in Ringachsrichtung einen magnetischen Fluss erzeugbar macht.

Die Bremsanordnung weist auch eine abzubremsende Welle auf, die drehbar gelagert ist, insbesondere in einem Bremslagerschild, welches vorzugsweise als Gehäuseteil 12 ausgeführt und somit Teil des Gesamt-Gehäuses ist, also gehäusebildend ist.

Die Welle weist eine Verzahnung auf oder ist mit einem eine Verzahnung aufweisenden Teil, insbesondere Hülsenteil, drehfest verbunden.

Ein vorzugsweise scheibenförmig ausgeführter Bremsbelagträger 4 weist eine Innenverzahnung auf, die mit der Verzahnung im Eingriff steht. Auf diese Weise ist der Bremsbelagträger 4 axial verschiebbar auf der Welle angeordnet.

Der Bremsbelagträger 4 weist axial beidseitig einen Bremsbelag 5 auf. Eine drehfest mit dem Magnetkörper 1 verbundene Ankerscheibe 3 wird bei bestromter Ringspule, also Bremsspule 14, zum Magnetkörper 1 hin angezogen, also axial von dem ersten Bremsbelagträger 4 weg. Die Ankerscheibe 3 weist eine mittig angeordnete Ausnehmung auf, durch welche die Welle hindurch ragt.

Der Magnetkörper 1 ist vorzugsweise aus einem ferromagnetischen Material gefertigt, wie GGG Guss oder aus einem Sphäroguss.

Die Ankerscheibe 3 ist vorzugsweise aus Stahl gefertigt.

Am Magnetkörper 1 stützen sich erste Federelemente 2 ab, welche auf die Ankerscheibe 3 drücken. Somit wird die Ankerscheibe 3 bei unbestromter Ringspule, also Bremsspule 14, weggedrückt vom Magnetkörper 1, insbesondere der mit dem Lagerschild fest verbunden ist, und drückt somit auf einen ersten Bremsbelag 5, welcher an der ihr zugewandten axialen Seite des ersten Bremsbelagträgers 4 vorgesehen ist.

Somit wird der erste Bremsbelagträger 4 mit seinem der Bremsfläche zugewandten Bremsbelag 5 auf eine drehfest mit dem Magnetkörper 1 verbundenen, aber axial bewegbar angeordnete Lamelle 6 gedrückt, welche somit auf einen zweiten Bremsbelag 11 drückt, welcher auf der der Lamelle 6 zugewandten Seite eines zweiten, drehfest mit der Welle verbundenen Bremsbelagträgers 10 angeordnet ist. Der zweite Bremsbelagträger 10 weist wiederum eine Innenverzahnung auf, die im Eingriff steht mit der Verzahnung der Welle beziehungsweise mit der Verzahnung des drehfest mit der Welle verbundenen Teils, so dass der zweite Bremsbelagträger 10 ebenfalls in Umfangsrichtung formschlüssig und daher drehfest mit der Welle verbunden ist, aber in axialer Richtung verschiebbar angeordnet ist.

Ein weiterer, auf der von der Lamelle 6 abgewandten axialen Seite des Bremsbelagträgers 10 wird somit auf die Bremsfläche eines Teils 12, insbesondere des Bremslagerschilds, gedrückt.

Die Ankerscheibe 3 ist bei ihrer axialen Bewegung von Führungselementen geführt, die mit dem Magnetkörper 1 fest verbunden, insbesondere schraubverbunden, sind. Hierzu weist sie axial durchgehende Ausnehmungen auf, durch welche die Führungselemente hindurchragen.

Vorzugsweise ist der Magnetkörper 1 mit dem Gehäuseteil 12, also Bremslagerschild, schraubverbunden, wobei Abstandshülsen, Federelemente und/oder Schraubelemente zur axialen Beabstandung, insbesondere Begrenzung, vorgesehen sind, die als Führungselemente wirksam sind.

Die Lamelle 6 ist als axial dünnwandige Stahlscheibe ausführbar.

Zur axialen Begrenzung ist eine Schraube 8, insbesondere Stiftschraube, in eine Gewindebohrung des Magnetkörpers 1 zumindest teilweise eingeschraubt, also mit dem Magnetkörper 1 schraubverbunden. Eine mit der Schraube 8 schraubverbundene Mutter 7, die gegen ein Sicherungselement 13 geschraubt ist begrenzt die Lamelle 6 axial.

Die Schraube 8 ist durch eine Ausnehmung der Lamelle 6, insbesondere ein axial durchgehendes Loch, insbesondere Bohrloch, hindurchgeführt.

In Umfangsrichtung sind mehrere zweite Federelemente 9 angeordnet, die in Umfangsrichtung vorzugsweise voneinander regelmäßig beabstandet sind und auf gleichem Radialabstand angeordnet sind.

Ein jeweiliges zweites Federelement 9 stützt sich am Gehäuseteil 12, also Bremslagerschild, ab und drückt gegen die Lamelle 6. Somit ist ein definiertes Lüften der Bremse gewährleistbar.

In Umfangsrichtung sind mehrere erste Federelemente 2 angeordnet, die in Umfangsrichtung vorzugsweise voneinander regelmäßig beabstandet sind und auf gleichem Radialabstand angeordnet sind.

Ebenso sind In Umfangsrichtung mehrere Schrauben 8 mit entsprechend axial begrenzend wirkenden Muttern 7 angeordnet, die in Umfangsrichtung vorzugsweise voneinander regelmäßig beabstandet sind und auf gleichem Radialabstand angeordnet sind.

Mit der erfindungsgemäßen Anordnung ist es ermöglicht, dass der zweite Bremsbelag 11 beziehungsweise der zweite Bremsbelagträger 10 im gelüfteten Zustand der Bremse, also bei bestromter Bremsspule 14, einen Abstand L/2 aufweist von der Lamelle 6 und dass der erste Bremsbelag 5 beziehungsweise der erste Bremsbelagträger 4 einen Abstand L/2 aufweist von der Ankerscheibe 3. Somit ist die Beabstandung der Bremsbeläge von dem jeweils die Bremsung aktivierenden Teil, also Ankerscheibe 3 beziehungsweise Lamelle 6, gleich. Im eingefallenen Zustand der Bremse, also bei nicht bestromter Bremsspule 14, drückt die Ankerscheibe 3 auf den ersten Bremsbelag 5 des ersten Bremsbelagträgers 4, der wiederum mit seinem axial abgewandten weiteren Bremsbelag 5 auf die Lamelle 6 drückt. Dabei wird die Lamelle 6 axial verschoben und auf den zweiten Bremsbelag 11 des zweiten Bremsbelagträgers 10 gedrückt, der wiederum mit seinem axial von der Lamelle 6 abgewandten weiteren zweiten Bremsbelag 11 auf das die Bremsfläche aufweisende Teil 12 drückt. In diesem eingefallenen Zustand der Bremse hat der Abstand der Ankerscheibe 3 vom Magnetkörper 1 den Wert L, also ist der gesamte Luftspalt L zwischen der Ankerscheibe 3 und dem Magnetkörper 1 angeordnet.

Für den eingefallenen Zustand der Bremse ist der spezifische Luftspalt L/2 zwischen Lamelle 6 und zweitem Bremsbelagträger 10 mit Bremsbelag 11 mittels der Mutter 7 einstellbar. Der restliche Luftspalt stellt sich somit zwischen Ankerscheibe 3 und erstem Bremsbelag 5 ein.

Bei einem weiteren Ausführungsbeispiel ist statt der Stiftschraube als Schraube 8 auch eine Schraube mit Schraubenkopf verwendbar, wobei dann der Schraubenkopf die Lamelle 6 axiale begrenzt.

Bei weiteren erfindungsgemäßen Ausführungsbeispielen wird die Lamelle 6 in axialer Richtung von einem Führungselement geführt.

### Bezugszeichenliste

1 Magnetkörper, insbesondere Spulenkern
2 erstes Federelement
3 Ankerscheibe
4 erster Bremsbelagträger, scheibenförmig
5 Bremsbelag
6 Lamelle
7 Mutter
8 Schraube, insbesondere Stiftschraube
9 zweites Federelement
10 zweiter Bremsbelagträger, scheibenförmig
11 zweiter Bremsbelag
12 Gehäuseteil und/oder Bremsfläche aufweisendes Teil, insbesondere Bremslagerschild
13 Sicherungselement
14 Bremsspule
L Luftspaltlänge

## Patentansprüche

1. Bremsanordnung mit einer abzubremsenden Welle, die mittels eines Lagers in einem Gehäuseteil, insbesondere Lagerflansch, gelagert ist,
wobei das Gehäuseteil (12) drehfest mit einer Spulenwicklung, insbesondere Bremsspule (14), verbunden ist,
wobei eine Ankerscheibe drehfest, aber axial bewegbar mit dem Gehäuseteil (12) verbunden ist,
wobei ein erster und ein zweiter Bremsbelagträger jeweils drehfest aber axial bewegbar mit der Welle verbunden ist,
wobei axial zwischen den Bremsbelagträgern eine
drehfest aber axial bewegbar Lamelle angeordnet ist, wobei die Lamelle mittels eines Begrenzungsmittels axial begrenzt ist, und wobei das Begrenzungsmittel mit dem Gehäuseteil (12) verbunden ist, **dadurch gekennzeichnet dass**
das Gehäuseteil (12) eine Bremsfläche aufweist, gegen die ein Bremsbelag des ersten oder zweiten Bremsbelagträgers drückbar ist,
wobei das Begrenzungsmittel einen Anschlags-Abschnitt aufweist, wobei der Anschlags-Abschnitt radial weiter ausgedehnt ist als der den Anschlags-Abschnitt mit dem Spulenkern verbindende Abschnitt des Begrenzungsmittels,
wobei der Anschlags-Abschnitt eine auf ein Schraubteil (8) aufgeschraubte Mutter (7) ist oder ein Schraubenkopf eines Schraubteils.

2. Bremsanordnung nach Anspruch 1,
**dadurch gekennzeichnet, dass**
zwischen Lamelle (6) und einem mit dem Gehäuseteil verbundenen Teil, insbesondere Spulenkern der Spulenwicklung und/oder die Spulenwicklung aufnehmender Magnetkörper, ein Federelement (9) angeordnet ist,
zum Rückstellen der Lamelle bei Nichtbestromung der Spulenwicklung und/oder zum Andrücken der Lamelle gegen das Begrenzungsmittel, insbesondere gegen einen Anschlags-Abschnitt, insbesondere Absatz, des Begrenzungsmittels.

3. Bremsanordnung nach mindestens einem der vorangegangenen Ansprüche,
**dadurch gekennzeichnet, dass**
die Lamelle aus Stahl, insbesondere aus Stahlblech, gefertigt ist
und/oder dass
die Lamelle als Lochscheibe ausgeführt ist.

4. Bremsanordnung nach mindestens einem der vorangegangenen Ansprüche,
**dadurch gekennzeichnet, dass**
die Ankerscheibe aus einem ferromagnetischen Werkstoff, insbesondere Stahl, ausgeführt ist,
so dass bei bestromter Spulenwicklung die Ankerscheibe axial angezogen wird zum Magnetkörper hin.

5. Bremsanordnung nach mindestens einem der vorangegangenen Ansprüche,
**dadurch gekennzeichnet, dass**
die Spulenwicklung als Ringwicklung ausgeführt ist und in einem als Spulenkern wirksamen Magnetkörper aufgenommen ist,
insbesondere wobei der Spulenkern aus GGG-Guss, insbesondere Grauguss, gefertigt ist.

6. Bremsanordnung nach mindestens einem der vorangegangenen Ansprüche,
**dadurch gekennzeichnet, dass**
das Begrenzungsmittel ein Schraubteil, insbesondere Stiftschraube oder Schraube, umfasst, insbesondere wobei das Schraubteil mit einem Teil verbunden ist, insbesondere mit einem Schraubenkopf stoffschlüssig oder mit einer Mutter schraubverbunden ist.

7. Bremsanordnung nach mindestens einem der vorangegangenen Ansprüche,
**dadurch gekennzeichnet, dass**
jeder Bremsbelagträger axial beidseitig einen jeweiligen Bremsbelag aufweist.

8. Bremsanordnung nach mindestens einem der vorangegangenen Ansprüche,
**dadurch gekennzeichnet, dass**
die Lamelle eine Ausnehmung aufweist, durch welche das Begrenzungsmittel hindurchragt.

9. Bremsanordnung nach mindestens einem der vorangegangenen Ansprüche,
**dadurch gekennzeichnet, dass**
das Gehäuseteil aus Stahl oder Stahlguss gefertigt ist.

10. Elektromotor mit einer Bremsanordnung nach mindestens einem der vorangegangenen Ansprüche,
**dadurch gekennzeichnet, dass**
die Welle eine Rotorwelle des Motors ist oder mit der Rotorwelle des Motors drehfest verbunden ist,
wobei die Rotorwelle mit einem Rotorblechpaket verbunden ist, an dem ein Kurzschlusskäfig und/oder Dauermagnete angeordnet sind.

## Claims

1. A braking arrangement with a shaft which is to be braked, which is mounted by means of a bearing in a housing part, in particular bearing flange,
wherein the housing part (12) is connected non-rotatably to a coil winding, in particular brake coil (14),
wherein an armature disc is connected non-rotatably but axially movably to the housing part (12),
wherein a first and a second brake lining carrier are connected in each case non-rotatably but axially movably to the shaft,
wherein a non-rotatably but axially movably disc plate [sic] is arranged axially between the brake lining carriers,
wherein
the disc plate is axially limited by means of a limiting means,
and
wherein the limiting means is connected to the housing part (12),
**characterised in that**
the housing part (12) has a braking surface,
against which a brake lining of the first or second brake lining carrier can be pressed,
wherein the limiting means has a stop portion, wherein the stop portion is extended further radially than the portion of the limiting means which connects the stop portion to the coil core,
wherein the stop portion is a nut (7) screwed onto a screwing part (8) or a screw head of a screwing part.

2. A braking arrangement according to Claim 1,
**characterised in that**
between the disc plate (6) and a part connected to the housing part, in particular coil core of the coil winding and/or magnet body which receives the coil winding, there is arranged a spring element (9),
for resetting the disc plate when the coil winding is non-energised and/or for pressing the disc plate against the limiting means, in particular against a stop portion, in particular shoulder, of the limiting means.

3. A braking arrangement according to at least one of the preceding claims,
**characterised in that**
the disc plate is manufactured from steel, in particular from steel sheet,
and/or **in that**
the disc plate is embodied as a perforated disc.

4. A braking arrangement according to at least one of the preceding claims,
**characterised in that**
the armature disc is formed from a ferromagnetic material, in particular steel,
so that when the coil winding is energised the armature disc is axially attracted towards the magnet body.

5. A braking arrangement according to at least one of the preceding claims,
**characterised in that**
the coil winding is embodied as a ring winding and is received in a magnet body which is effective as a coil core,
in particular wherein the coil core is manufactured from nodular cast iron, in particular grey cast iron.

6. A braking arrangement according to at least one of the preceding claims,
**characterised in that**
the limiting means comprises a screwing part, in particular stud bolt or screw,
in particular wherein the screwing part is connected to a part, in particular to a screw head by a material-formed bond or is screw-connected to a nut.

7. A braking arrangement according to at least one of the preceding claims,
**characterised in that**
each brake lining carrier has a respective brake lining axially on both sides.

8. A braking arrangement according to at least one of the preceding claims,
**characterised in that**
the disc plate has a cutout through which the limiting means protrudes.

9. A braking arrangement according to at least one of the preceding claims,
**characterised in that**
the housing part is manufactured from steel or cast steel.

10. An electric motor having a braking arrangement according to at least one of the preceding claims,
**characterised in that**
the shaft is a rotor shaft of the motor or is connected non-rotatably to the rotor shaft of the motor,
wherein the rotor shaft is connected to a laminated rotor core on which a squirrel cage and/or permanent magnets is/are arranged.

## Revendications

1. Ensemble de frein, avec un arbre à freiner qui est monté dans un élément de boîtier au moyen d'un palier, en particulier d'une bride de palier,
sachant que l'élément de boîtier (12) est relié en solidarité de rotation à un bobinage, en particulier une bobine de frein (14),
sachant qu'un disque d'induit est relié à l'élément de boîtier (12) en solidarité de rotation mais à mobilité axiale,
sachant qu'un premier et un deuxième support de garniture de frein sont respectivement reliés à l'arbre en solidarité de rotation mais à mobilité axiale,
sachant qu'une lamelle solidaire en rotation mais axialement mobile est disposée axialement entre les supports de garniture de frein,
sachant que la lamelle est limitée axialement par un moyen de limitation,
et sachant que le moyen de limitation est relié à l'élément de boîtier (12),
**caractérisé en ce que** l'élément de boîtier (12) présente une surface de freinage, contre laquelle peut être pressée une garniture de frein du premier ou du deuxième support de garniture de frein,
sachant que le moyen de limitation présente une partie de butée, sachant que la partie de butée est davantage étendue radialement que la partie du moyen de limitation qui relie la partie de butée au noyau de bobine,
sachant que la partie de butée est un écrou (7) vissé sur un élément de vissage (8), ou une tête de vis d'un élément de vissage.

2. Ensemble de frein selon la revendication 1, **caractérisé en ce qu'**un élément formant ressort (9) est disposé entre la lamelle (6) et un élément relié à l'élément de boîtier, en particulier un noyau de bobine du bobinage et/ou un corps magnétique recevant le bobinage,
afin de rappeler la lamelle lorsque le bobinage n'est pas alimenté en courant, et/ou afin de presser la lamelle contre le moyen de limitation, en particulier contre une partie de butée, en particulier un gradin, du moyen de limitation.

3. Ensemble de frein selon au moins une des revendications précédentes, **caractérisé en ce que** la lamelle est fabriquée en acier, en particulier en tôle d'acier,
et/ou **en ce que** la lamelle est réalisée sous forme de disque perforé.

4. Ensemble de frein selon au moins une des revendications précédentes, **caractérisé en ce que** le disque d'induit est réalisé en un matériau ferromagnétique, en particulier en acier
de sorte que le disque d'induit est attiré axialement en direction du corps magnétique lorsque le bobinage est alimenté en courant.

5. Ensemble de frein selon au moins une des revendications précédentes, **caractérisé en ce que** le bobinage est réalisé sous forme de bobinage annulaire et est reçu dans un corps magnétique jouant le rôle de noyau de bobine,
sachant en particulier que le noyau de bobine est fabriqué en fonte GGG, en particulier en fonte grise.

6. Ensemble de frein selon au moins une des revendications précédentes, **caractérisé en ce que** le moyen de limitation comprend un élément de vissage, en particulier un goujon fileté ou une vis,
sachant en particulier que l'élément de vissage est relié à un élément, en particulier est relié par liaison de matière à une tête de vis ou est relié par vissage à un écrou.

7. Ensemble de frein selon au moins une des revendications précédentes, **caractérisé en ce que** chaque support de garniture de frein présente axialement de chaque côté une garniture de frein respective.

8. Ensemble de frein selon au moins une des revendications précédentes, **caractérisé en ce que** la lamelle présente un évidement à travers lequel passe le moyen de limitation.

9. Ensemble de frein selon au moins une des revendications précédentes, **caractérisé en ce que** l'élément de boîtier est fabriqué en acier ou en fonte d'acier.

10. Moteur électrique avec un ensemble de frein selon au moins une des revendications précédentes, **caractérisé en ce que** l'arbre est un arbre de rotor du moteur ou est relié en solidarité de rotation à l'arbre de rotor du moteur,
sachant que l'arbre de rotor est relié à un empilage de tôles de rotor sur lequel sont disposés une cage d'écureuil et/ou des aimants permanents.
